# EUROPÄISCHE PATENTSCHRIFT

(11) **EP 2 145 278 B1**
(45) Veröffentlichungstag und Bekanntmachung des Hinweises auf die Patenterteilung: **03.08.2011**
(21) Anmeldenummer: 08734678.9
(22) Anmeldetag: 19.03.2008
(51) Int. Cl.: G06F 21/00

(54) **VERSTECKTE SICHERHEITSMERKMALE IN DIGITALEN SIGNATUREN**
CONCEALED SECURITY FEATURES IN DIGITAL SIGNATURES
CARACTÉRISTIQUES DE SÉCURITÉ DISSIMULÉES DANS DES SIGNATURES NUMÉRIQUES

(30) Priorität: 28.03.2007 DE 102007014971
(43) Veröffentlichungstag der Anmeldung: 20.01.2010
(73) Patentinhaber: Karlsruher Institut für Technologie, 76131 Karlsruhe (DE)
(72) Erfinder: BOHLI, Jens-Matthias Dr., 68161 Mannheim (DE); MÜLLER-QUADE, Jörn Dr., 76229 Karlsruhe (DE)
(74) Vertreter: Müller-Boré & Partner Patentanwälte
(86) Internationale Anmeldenummer: PCT/EP2008/002212
(87) Internationale Veröffentlichungsnummer: WO 2008/116588

(56) Entgegenhaltungen:
- SCHNEIER B: "Applied Cryptography (second edition)" 25. Mai 2005 (2005-05-25), JOHN WILEY & SONS, US , XP002490778 Seiten 34-42 Seiten 79,80
- JENS-MATTHIAS BOHLI; RAINER STEINWAND: "On Subliminal Channels in Deterministic Signature Schemes" LECTURE NOTES ON COMPUTER SCIENCE, Bd. 3906, 25. Mai 2005 (2005-05-25), Seiten 182-194, XP002490777 Berlin / Heidelberg
- ZHENJIE HUANG ET AL: "Multi-Signature with Anonymous Threshold Subliminal Channel for Ad Hoc Environments" ADVANCED INFORMATION NETWORKING AND APPLICATIONS, 2005. AINA 2005. 19T H INTERNATIONAL CONFERENCE ON TAIPEI, TAIWAN 25-30 MARCH 2005, PISCATAWAY, NJ, USA,IEEE, Bd. 1, 25. März 2005 (2005-03-25), Seiten 67-71, XP010788557 ISBN: 978-0-7695-2249-4

## Beschreibung

Die vorliegende Erfindung bezieht sich generell auf Signaturen für elektronische Dokumente. Spezifischer bezieht sich die vorliegende Erfindung auf ein computer-implementiertes Verfahren, ein Computerprogrammprodukt und ein System zur Identifikation gültiger digitaler Signaturen.

Elektronische Dokumente will man nicht nur verschlüsseln sondern auch signieren können. Das macht man in der Regel mit digitalen Signaturen. Digitale Signaturen haben eine ähnliche Funktion wie gewöhnliche Unterschriften. Beispiele für elektronische Dokumente, die signiert werden müssen bzw. sollen, sind Kaufverträge, welche über das Internet abgewickelt werden, elektronische Banktransaktionen, elektronische Rechnungen und/oder verbindliche E-mails. Im allgemeinen werden zum Signieren elektronischer Dokumente asymmetrische Signaturverfahren verwendet, welche von einem Schlüsselpaar abhängen, das einen privaten (insbesondere geheimen) Schlüssel zum Signieren eines elektronischen Dokuments und einen dazugehörigen öffentlichen (insbesondere nicht geheimen) Schlüssel zum Verifizieren der Signatur umfaßt.

Eine digitale Signatur (und damit ein entsprechendes Signaturverfahren) gilt nur so lange als sicher, solange eine bestimmte Annahme, auf der eine digitale Signatur beruht, gültig ist. Insbesondere gilt eine digitale Signatur als sicher, solange es praktisch unmöglich ist, den privaten Schlüssel aus dem öffentlichen Schlüssel und (mit dem privaten Schlüssel) signierten Daten, wie z.B. eine Nachricht oder ein Dokument, zu berechnen. Entsprechend liegen den heute bekannten und verwendeten Signaturverfahren als schwierig geltende mathematische Probleme (z. B. das Faktorisierungsproblem für ganze Zahlen, das Diskrete-Logarithmus-Problem in der multiplikativen Gruppe eines Primköprers *Fₚ* oder das Diskrete-Logarithmus-Problem in den Gruppen *E(Fp)* bzw. *E(F₂^{m})*, also in elliptischen Kurven über Primkörpem) zugrunde, d.h. also mathematische Probleme, welche (bezüglich Zeit und/oder Speicherplatzbedarf) nicht effizient gelöst werden können bzw. für die eine effiziente Lösung zumindest gegenwärtigen nicht bekannt ist. Damit hängt also die Sicherheit bekannter Verfahren zum elektronischen Signieren insbesondere von der Schwierigkeit ab, bestimmte Berechnungsprobleme aus der Zahlentheorie zu lösen. Gemäß der Bundesnetzagentur gelten solche Signaturverfahren (insbesondere RSA-Verfahren, DSA und DSA-Varianten, die auf elliptischen Kurven basieren) zumindest für einige der kommenden Jahre als sicher. Möchte man nun eine langfristige Sicherheit digitaler Signaturen gewährleisten, welche mit bekannten und weit verbreiteten Signaturverfahren (insbesondere die zuvor genannten) erzeugt worden sind, so muß auch nach einem Bruch der Annahme (d.h. wenn das zugrunde liegende Signaturverfahren nicht mehr als sicher gilt) eine gültige digitale Signatur noch identifizierbar sein bzw. eine mögliche Fälschung erkannt werden können.

Da das Erkennen und der Beweis bzw. Nachweise einer (erfolgreichen) Fälschung bzw. die Identifikation einer gültigen Signatur für die zuvor genannten Signaturverfahren nicht möglich ist, wurden sogenannte Fail-Stop Signaturen entwickelt. Fail-Stop Signaturen erlauben es, eine Fälschung einer digitalen Signatur zu erkennen und zu beweisen. Allerdings sind Fail-Stop Signaturverfahren ineffizient und daher in der Praxis nicht einsetzbar, weil die Schlüsselgenerierung sehr aufwendig ist. Insbesondere basieren Fail-Stop Signaturen auf einer Variante von Einwegsignaturen. Entsprechend basieren Fail-Stop Signaturen nicht auf weit verbreiteten, gebräuchlichen und praktisch einsetzbaren Signaturverfahren wie RSA-Verfahren, DSA und DSA-Varianten, die auf elliptischen Kurven basieren.

Aufgabe der vorliegenden Erfindung ist es, eine vereinfachte und (insbesondere bezüglich Zeit und/oder Kosten) effizientere Identifizierung einer gültigen digitalen Signatur auch dann noch zu ermöglichen, wenn eine zugrundeliegende Sicherheitsannahme nicht mehr gilt, wobei ein weit verbreitetes und gebräuchliches Signaturverfahren verwendet werden kann.

Diese Aufgabe ist entsprechend der Erfindung durch die Merkmale der unabhängigen Ansprüche gelöst. Bevorzugte Ausführungsformen der Erfindung sind Gegenstand der abhängigen Ansprüche.

Entsprechend der Erfindung ist ein computer-implementiertes Verfahren zur Identifikation zumindest einer gültigen digitalen Signatur vorgesehen, die Schritte umfassend:
- Bereitstellen eines breitbandigen Kanals zwischen einem Sender und einem Empfänger;
- Vorsehen eines ersten Geheimnisses bzw. eines ersten geheimen Schlüssels, welcher bei dem Sender (sicher) hinterlegt ist bzw. an einem sicheren Ort (bevorzugt in einer Kodiereinrichtung) gespeichert ist;
- Vorsehen eines zweiten Geheimnisses bzw. eines geheimen Schlüssels, welcher bei dem Sender und bei einer vertrauenswürdigen Instanz (sicher) hinterlegt ist bzw. an einem sicheren Ort (bevorzugt bei einem Notar) gespeichert ist; und
- Erzeugen einer digitalen Signatur und zwar durch Verstecken des ersten und zweiten Geheimnisses in der digitalen Signatur (bevorzugt durch Anwendung des ersten geheimen Schlüssels auf Daten (insbesondere ein Dokument oder eine Nachricht) und durch Anwendung des zweiten geheimen Schlüssels auf die Daten); wobei ein eventuelles Überprüfen der Identität des Senders insbesondere durch die vertrauenswürdige Instanz unter Verwendung der Daten, dem zweiten geheimen Schlüssel und der digitalen Signatur ermöglicht wird.

Bevorzugt ist der breitbandige Kanal ein subliminaler Kanal.

Entsprechend wird die digitale Signatur bevorzugt mit einem subliminalen Kanal bereitgestellt, der bevorzugt breitbandig ist. Dementsprechend können Informationen, insbesondere ein erstes und ein zweites Geheimnis, in einem subliminalen Kanal einer digitalen Signatur versteckt werden.

Entsprechend können Daten, wie beispielsweise ein Dokument oder eine Nachricht, welche mittels einer digitalen Signatur von einem Sender signiert werden, insbesondere über einen geschützten bzw. geheimen Kommunikationskanal (d.h. ein Kommunikationskanal, welcher nicht von unberechtigten Dritten abgehört werden kann), einen sogenannten subliminalen Kanal, übermittelt werden. In einem breitbandigen subliminalen Kanal stehen neben einer bestimmten Anzahl von Bits, die zur Übertragung einer digitalen Signatur verwendet werden, weitere Bits zur Übertragung von Informationen zur Verfügung.

Erfindungsgemäß werden zwei geheime Schlüssel bzw. Geheimnisse, welche zum Verschlüsseln von Daten geeignet sind, sicher, bevorzugt in einem elektronischen Datenträger, beispielsweise wie eine Chipkarte, hinterlegt. Die geheimen Schlüssel werden zum Signieren von Daten, wie z.B. einem Dokument oder einer Nachricht verwendet. Dazu werden die Daten bevorzugt auf eine natürliche Zahl zwischen 0 und n-1, einen sogenannten Hashwert, abgebildet. Dazu wird bevorzugt eine kollisionsresistente Hashfunktion, die eine Einwegfunktion ist, verwendet. Zum Erzeugen bzw. Berechnen einer digitalen Signatur wird entsprechend der erste geheime Schlüssel auf die somit gehashten Daten angewendet. Der erzeugte Wert ist im Wesentlichen ein Hashwert, insbesondere ein Bitstring einer bestimmten festen Länge. Dieser Bitstring ist (zumindest teilweise) wesentlich kürzer als die durch den bevorzugt subliminalen (Kommunikations-)Kanal zur Verfügung gestellte oder mögliche Bitlänge zur Übertragung von Daten. Neben diesem ersten Hashwert wird ein zweiter Hashwert erzeugt und zwar durch Anwendung des zweiten geheimen Schlüssels auf die gehashten Daten. Somit besteht die endgültig erzeugte signatur aus zwei Hashwerten, deren Bitlänge bevorzugt (zumindest teilweise) im Wesentlichen der Bitlänge des verwendeten subliminalen Kanals entspricht. Insbesondere wird ein verwendetes Signaturverfahren mit breitbandigem subliminalen Kanal somit deterministisch.

Zur Überprüfung einer Identität einer gültigen digitalen Signatur, wird der zweite geheime Schlüssel bei einer vertrauenswürdigen Instanz, insbesondere eine dritte Instanz (z.B. eine öffentliche Organisation wie die Bundesnetzargentur, ein Notar oder sonstige unabhängige Organisationen oder Trustcenter); der zwei Parteien, (insbesondere der Sender und der Empfänger von erfindungsgemäß signierten Daten) vertrauen, hinterlegt. Wird die Identität des Senders der signierten Daten angezweifelt, kann die digitale Signatur des Senders insbesondere durch die vertrauenswürdige Instanz überprüft werden. Entsprechend wendet die vertrauenswürdige Instanz den zweiten geheimen Schlüssel auf die Daten an, welche signiert übermittelt wurden. Ist der erzeugte bzw. berechnete bzw. ermittelte Hashwert identisch mit einem Hashwert, der in der digitalen Signatur des Senders enthalten ist, ist die Identität des Senders im Wesentlichen nachgewiesen. Ist andererseits der ermittelte Hashwert nicht in der digitalen Signatur des Senders enthalten, ist eine Fälschung der digitalen Signatur im Wesentlichen nachgewiesen bzw. bewiesen.

Entsprechend kann eine digitale Signatur mittels zweier geheimer Schlüssel (Geheimnisse) erzeugt werden. Solange die Identität des Senders eines mit der digitalen Signatur signierten Dokuments nicht angezweifelt wird, ist es insbesondere nicht notwendig, die Identität zu überprüfen. Sollte aber eine Annahme, daß das in dem Verfahren verwendete Signaturverfahren nicht mehr gilt, sollte also z.B. das Signaturverfahren nicht mehr sicher sein, so kann mittels des Signaturverfahrens gemäß der vorliegenden Erfindung die Identität des Senders insbesondere durch eine vertrauenswürdige Instanz überprüft werden.

Bevorzugt umfaßt das Verfahren weiterhin den Schritt eines Überprüfens einer Integrität der vertrauenswürdigen Instanz durch Vergleich der digitalen Signatur mit einer zweiten digitalen Signatur, welche unter Verwendung des ersten Geheimnisses, des zweiten Geheimnisses und der Daten erzeugt wird.

Ein solcher Nachweis ist insbesondere dadurch möglich, daß ein verwendetes Signaturverfahren mit breitbandigem subliminalen Kanal durch das erfindungsgemäße Verfahren deterministisch wird.

Entsprechend kann auch dann die Identität des Senders anhand einer digitalen Signatur bzw. eine Fälschung einer digitalen Signatur nachgewiesen bzw. bewiesen werden, wenn die Integrität der vertrauenswürdigen Instanz anzuzweifeln ist, insbesondere auch dann, wenn der zweite geheime Schlüssel nicht bei einer vertrauenswürdigen Instanz hinterlegt wurde bzw. die nötige Vertrauenswürdigkeit bzw. Geheimhaltung nicht (mehr) gegeben ist. Entsprechend muß im Wesentlichen lediglich sicher gestellt sein, daß der erste und der zweite geheimen Schlüssel sicher hinterlegt sind und nicht durch einen Angreifer manipuliert werden können bzw. konnten. Wird nun eine gemäß der vorliegenden Erfindung erzeugt digitale Signatur zu Daten wie beispielsweise einem Dokument oder einer Nachricht angezweifelt, so wird durch Anwendung des ersten und zweiten geheimen Schlüssels auf die Daten eine weitere digitale Signatur erzeugt bzw. berechnet. Ist die weitere digitale Signatur identisch mit der zuvor erzeugten Signatur, so ist die Identität des Senders im Wesentlichen nachgewiesen. Ist die weitere digitale Signatur hingegen nicht identisch mit der zuvor erzeugten Signatur, so ist eine Fälschung einer Signatur des Senders durch einen Angreifer im Wesentlichen nachgewiesen.

Weiterhin bevorzugt sind der erste geheime Schlüssel und das zweite Geheimnis in einer Kodiereinrichtung gespeichert.

Entsprechend ist die Kodiereinrichtung insbesondere eine Chipkarte oder ein digitaler Datenträger, welche vor Zugriff unbefugter Dritter gesichert ist. Entsprechend ist die Kodiereinrichtung bevorzugt sowohl gegen unbefugtes Auslesen der Geheimnisse bzw. geheimer Schlüssel als auch gegen eine unbefugte Manipulation eines implementierten Signaturverfahrens zum Erzeugen der geheimen Schlüssel, wie beispielsweise ein Berechnen einer falschen Signatur, geschützt.

Bevorzugter werden das erste Geheimnis und das zweite Geheimnis durch einen Zufallszahlengenerator erzeugt.

Weiterhin können das erste und das zweite Geheimnis wie ein erster und ein zweiter geheimer Schlüssel durch Schlüsselerzeugung eines Verschlüsselungsverfahrens oder eines Signaturverfahrens erzeugt werden. Beispielsweise werden unter Verwendung von RSA Verschlüsselungsverfahren und/oder RSA-basierten Signaturverfahren Geheimnisse bzw. Schlüssel durch zufällig (mittels eines Zufallszahlengenerators) erzeugte Primzahlen mit bestimmten Eigenschaften ausgewählt.

Entsprechend kann ein weit verbreitetes und gebräuchliches Signaturverfahren, wie beispielsweise RSA-Verfahren, wie RSA-PSS, DSA und DSA Varianten, die auf elliptischen Kurven basieren, bevorzugt verwendet werden. Durch die Verwendung des Signaturverfahrens in einem breitbandigen subliminalen Kanal, insbesondere durch die Erzeugung einer Signatur, die aus zwei durch zwei geheime Schlüssel bestimmten Hashwerten erzeugt bzw. berechnet wird, ist das Signaturverfahren im Wesentlichen deterministisch, d.h. zu denselben Daten wird bei Verwendung derselben ersten und zweiten geheimen Schlüssel jedesmal im Wesentlichen dieselbe digitale Signatur berechnet.

Entsprechend wird bevorzugt ein asymmetrisches Signaturverfahren verwendet, welches von einem Schlüsselpaar abhängt, das einen privaten (insbesondere geheimen) Schlüssel zum Erzeugen einer Signatur zu Daten und einen dazugehörigen öffentlichen (insbesondere nicht geheimen) Schlüssel zum Verifizieren der digitalen Signatur durch den berechtigten Empfänger der signierten Daten umfaßt.

Entsprechend der Erfindung ist weiterhin ein System zur Identifikation zumindest einer gültigen Signatur vorgesehen, umfassend:
- einen breitbandigen Kanal zwischen einem Sender und einem Empfänger; und
- eine Kodierungseinrichtung (insbesondere eine Chipkarte oder ein elektronischer Datenträger), welche ausgelegt ist, ein erstes Geheimnis und ein zweites Geheimnis zu speichern und eine digitale Signatur zu erzeugen und zwar durch bzw. durch Verstecken des ersten und zweiten Geheimnisses in dem breitbandigen Kanal der digitalen Signatur (bevozugt durch Anwendung des ersten Geheimnis auf Daten (insbesondere ein Hashwert) eines Dokuments bzw. einer Nachricht und durch Anwendung des zweiten Geheimnis auf die Daten);
- eine vertrauenswürdige Instanz (insbesondere eine vertrauenswürdige dritte Partei wie z.B. ein Trustcenter oder ein Notar), welche ausgelegt ist, das zweite Geheimnis zu hinterlegen und wobei die vertrauenswürdige Instanz (3) insbesondere weiterhin ausgelegt ist, eine eventuelle Überprüfung der Identität des Senders der digitalen Signatur unter Verwendung der Daten, dem zweiten Geheimnis und der digitalen Signatur zu ermöglichen.

Ein weiterer Aspekt der Erfindung betrifft ein Computerprogrammprodukt, insbesondere auf einem computerlesbaren Medium gespeichert oder als Signal verwirklicht, welches, wenn geladen in den Speicher eines Computers und ausgeführt von dem Computer, bewirkt, daß der Computer eine erfindungsgemäßes Verfahren oder eine bevorzugte Ausführungsform hiervon durchführt.

Gemäß eines weiteren Aspekts ist ein computer-implementiertes Verfahren und System zur Identifikation zumindest einer gültigen digitalen Signatur vorgesehen, umfassend:
- Bereitstellen eines engbandigen Kanals zwischen einem Sender und einem Empfänger;
- Vorsehen eines Geheimnisses, welcher bei dem Sender in einer Kodiereinrichtung hinterlegt ist;
- Vorsehen eines Initialwertes, welcher bei dem Sender in der Kodiereinrichtung hinterlegt ist; und
- Erzeugen einer digitalen Signatur und zwar durch den Initialwert und durch Anwendung des geheimen Schlüssels auf Daten eines Dokuments;
   wobei ein eventuelles Überprüfen der Identität des Senders durch Vergleich der digitalen Signatur mit einer zweiten digitalen Signatur ermöglicht wird, welche unter Verwendung des Initialwertes, des Geheimnisses und der Daten erzeugt wird.

Diese und andere Objekte, Merkmale und Vorteile der vorliegenden Erfindung werden durch Lesen der folgenden detaillierten Beschreibung von bevorzugten Ausführungsformen und begleitenden Zeichnungen offensichtlicher werden. Es sollte so zu verstehen sein, daß selbst wenn Ausführungsformen separat beschrieben sind, einzelne Merkmale davon zu zusätzlichen Ausführungsformen kombiniert werden können.
Figur 1 zeigt ein Blockdiagramm eines technischen Aufbaus eines Systems und Verfahrens zur Identifikation zumindest einer gültigen Signatur mit breitbandigem subliminalen Kanal.
Figur 2 zeigt ein Blockdiagramm eines technischen Aufbaus eines Systems und Verfahrens zur Identifikation zumindest einer gültigen Signatur mit breitbandigem subliminalen Kanal, wobei eine Integrität überprüfbar ist.
Figur 3 zeigt ein Blockdiagramm eines technischen Aufbaus eines Systems und Verfahrens zur Identifikation zumindest einer gültigen Signatur mit engbandigem subliminalen Kanal.
Figur 4 zeigt ein Blockdiagramm eines technischen Aufbaus eines Computers und eines Netzwerkes, welcher bevorzugt in Verbindung mit der Erfindung verwendet werden kann.

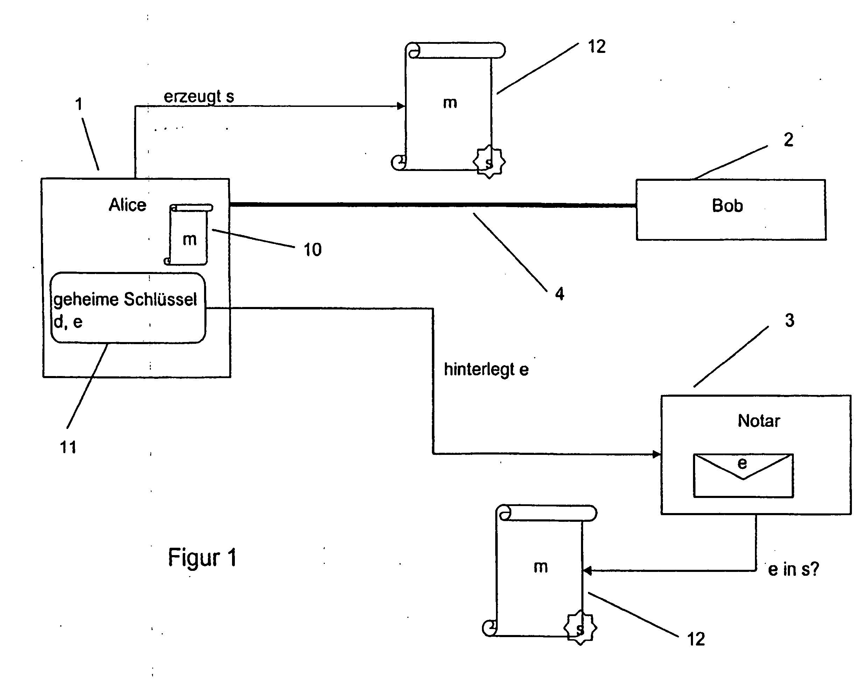

Figur 1 beschreibt ein bevorzugte Ausführungsform eines Verfahrens und Systems zur Erzeugung einer digitalen Signatur s zu einem (elektronischen) Dokument 10 und zur Identitätsüberprüfung eines Senders 1 durch eine vertrauenswürdige Instanz 3, wie beispielsweise einen Notar, wobei der Sender 1 ein dem Dokument 10 mit der digitalen Signatur s entsprechendes signiertes Dokument 12 über einen subliminalen Kanal 4 eines ein-, bi- oder multidirektionalen Netzwerks an einen Empfänger 2 schickt bzw. übermittelt bzw. überträgt. Der Sender 1 verwendet zum Signieren des Dokuments 10 ein Signaturverfahren. Das (elektronische) Dokument 10 kann beispielsweise ein Kaufvertrag, welcher über das Internet abgewickelt werden soll, eine elektronische Banktransaktion, eine elektronische Rechnung und/oder eine verbindliche E-mail sein.

Generell bietet eine digitale Signatur eine Möglichkeit, ein elektronisches Dokument) zu signieren. Verfahren zum Erzeugen und/oder Verifizieren einer digitalen Signatur sind kryptographische Verfahren, bei denen zu beliebigen Daten (z.B. eine Nachricht oder ein Dokument), welche elektronisch vorliegen (d.h. für einen Computer lesbar und verarbeitbar sind), eine Zahl (insbesondere eine digitale Signatur) berechnet werden kann. Die Urheberschaft und Zugehörigkeit zu den Daten einer digitalen Signatur kann durch jeden, beispielsweise durch einen Empfänger der Daten, geprüft werden. Entsprechend ist eine digitale Signatur im Wesentlichen eine natürliche Zahl zwischen 0 und einer Zahl n-1, welche durch einen Bitstring einer bestimmten festen Länge in einem Computer dargestellt werden kann.

Eine digitale Signatur kann mittels eines (digitalen) Signaturverfahrens erzeugt und verifiziert werden. Generell basieren Signaturverfahren im Wesentlichen auf asymmetrischen Kryptosystemen. Entsprechend wird durch Anwendung eines Kryptosystems ein Schlüsselpaar erzeugt, welches einen privaten (insbesondere geheimen) Schlüssel und einen öffentlichen (insbesondere nicht geheimen insbesondere in einer Datenbank hinterlegten) Schlüssel umfaßt. Ein Signaturverfahren gilt als sicher, wenn keine Person ohne Kenntnis des privaten Schlüssels einer Person *A* eine (digitale) Signatur s eines Dokuments *m* berechnen kann. Das sollte selbst dann nicht möglich sein, wenn Signaturen von anderen Nachrichten, Dokumenten und/oder Daten, welche von der Person *A* signiert wurden, bekannt sind. Zusätzlich muß gewährleistet sein, daß ein Verzeichnis (insbesondere eine Trusted Third Party (kurz TTP) wie beispielsweise ein Trustcenter, ein Notar, eine öffentliche Organisation wie die Bundesnetzargentur), welches zumindest einen öffentlichen Schlüssel zumindest einer Person umfaßt, vor Veränderungen durch Unbefugte gestützt ist. Durch ein solcher Verzeichnis ist es einem Betrüger nicht möglich, beispielsweise den öffentlichen Schlüssel von Person A durch seinen eigenen zu ersetzen.

Die Sicherheit an sich bekannter und weit verbreiteter (digitaler) Signaturverfahren (z.B. RSA-Verfahren wie RSA-PSS, DSA und DSA Varianten, basierend auf elliptischen Kurven wie EC-DSA, EC-KDSA, EC-GDSA und Nyberg-Rueppel-Signaturen) hängen von der Schwierigkeit ab, bestimmte Berechnungsprobleme aus der Zahlentheorie zu lösen, wie z.B. das Faktorisierungsproblem für ganze Zahlen, das Diskrete-Logarithmus-Problem in der multiplikativen Gruppe eines Primkörpers *Fₚ* und das Diskrete-Logarithmus-Problem in den Gruppen *E(Fp)* bzw. *E(F₂^{m}),* d.h. elliptischen Kurven über Primkörpern. Solche mathematischen (insbesondere zahlentheoretischen) Probleme werden im allgemeinen als schwierig bezeichnet, insbesondere heißt das, daß diese Probleme bezüglich Zeit und/oder Speicherplatzbedarf nicht effizient zu lösen sind, bzw. daß eine effiziente Lösung gegenwärtig nicht bekannt ist. Ob diese zahlentheoretischen Probleme immer schwierig bleiben, ist gegenwärtig im Wesentlichen nicht bekannt. Entsprechend beruht eine digitale Signatur auf der Annahme, daß das zugrunde liegende (mathematische) Problem schwierig ist.

Im allgemeinen wird nicht eine Menge von Daten, wie beispielsweise eine (elektronische) Nachricht oder ein (elektronisches) Dokument selbst signiert, sondern vielmehr ein Hashwert *m*, der aus den Daten erzeugt wird. Ein Hashwert ist im Wesentlichen eine natürliche Zahl, welche durch eine Bitfolge fester Länger (in einem Computer) dargestellt werden kann. Zum Erzeugen eines solchen Hashwertes wird im allgemeinen eine öffentlich bekannte, kollisionsresistente Hashfunktion verwendet, welche eine Einwegfunktion ist. Entsprechend ist es praktisch unmöglich, daß sowohl zwei Hashwerte zweier unterschiedlicher Mengen von Daten gleich sind (sogenannte Kollisionsresistenz) als auch daß zu einem gegebenen Hashwert aus dem entsprechenden Wertebereich ein Urbild bezüglich der verwendeten Hashfunktion zu finden ist (sogenannte Einwegfunktion). Zusätzlich können beim Hashen von Daten noch weitere Faktoren mit einbezogen werden, wie es beispielsweise bei RSA-PSS gemacht wird. Prinzipiell kann (zumindest teilweise) jedes digitale Signaturverfahren mit beliebigen bekannten Hashfunktionen kombiniert werden.

Generell kann zwischen deterministischen (digitalen) Signaturverfahren und probabilistischen (digitalen) Signaturverfahren unterschieden werden. Bei deterministischen Signaturverfahren ist eine digitale Signatur durch zu signierende Daten und einen verwendeten privaten Schlüssel eindeutig festgelegt. Insbesondere wird bei Verwendung eines deterministischen Signaturverfahrens zu einem Dokument bei Verwendung desselben privaten Schlüssels bei jedem Signieren dieselbe Signatur erzeugt bzw. berechnet. Dem gegenüber gehen bei probabilistischen Signaturverfahren Zufallswerte, welche beispielsweise mittels eines Zufallsgenerators erzeugt wurden, in eine Berechnung einer (digitalen) Signatur mit ein, so daß die entsprechende Signatur zu den zu signierenden Daten und einem verwendeten privaten Schlüssel viele verschiedene Werte annehmen kann. Im Wesentlichen sind Signaturverfahren die auf dem Diskreten-Logarithmus-Problem sowohl in endlichen Körpern als auch auf elliptischen Kurven beruhen probabilistisch.

Ein subliminaler Kanal bietet eine Möglichkeit, Informationen in einer öffentlichen Kommunikation beispielsweise über einen öffentlichen Kommunikationskanal zu verstecken. Es ist dann ein geteiltes Geheimnis notwendig, um subliminale Informationen zu rekonstruieren. Ein subliminaler Kanal kann auch in herkömmlichen Signaturverfahren, wie beispielsweise RSA-Verfahren wie RSA-PSS, DSA und DSA Varianten, basierend auf elliptischen Kurven wie EC-DSA, EC-KDSA, EC-GDSA und Nyberg-Rueppel-Signaturen, verwendet werden. Entsprechend können in einem digitalen Signaturschema (also im Wesentlichen in einem subliminalen Kanal), in welchem eine Menge von α Bits verwendet werden, um eine digitale Signatur (sicher) zu übersenden bzw. zu übermitteln bzw. zu übertragen und welches β Bits zur sicheren Übertragung von Daten unbeschadet von einer möglicher Fälschung zur Verfügung stellt (insbesondere für die Übersendung einer digitalen Signatur), wobei α > β ist, die verbleibenden α - β Bits (d.h. die Bits, die nicht zur Übermittlung einer erzeugten Signatur verwendet werden) zumindest teilweise für eine subliminale Kommunikation verwendet werden. Werden alle oder nahezu alle der verbleibenden α - β Bits verwendet, wird der entsprechende subliminale Kanal als breitbandiger subliminaler Kanal bezeichnet. Wird hingegen nur ein Teil der verbleibenden α - β Bits verwendet, so wird der entsprechende subliminale Kanal als engbandiger subliminaler Kanal bezeichnet. In anderen Worten, kann ein subliminaler Kanal z.B. bei einem Online-Banking verwendet werden. Beispielsweise führt der Benutzer eines Online-Bankings, daß von seiner Bank zur Verfügung gestellt wird, eine Banktransaktion auf seinem Konto durch. Dabei wird eine Kontobewegung, z.B. das Abheben einer Summe von dem Konto des Benutzer durch den Benutzer zu Hause an seinem Rechner ausgeführt. Nachdem der Benutzer die gewünschte Änderung an seinem Rechner vorgenommen hat, werden die entsprechenden Daten (beispielsweise über das Internet) an die Bank übertragen. Damit keine dritte, unberechtigte Person bestimmte Informationen, die mit der Transaktion zusammen übermittelt werden abhören kann, kann ein subliminaler Kanal verwendet werden, in dem diese Informationen versteckt werden. Damit die Bank die in dem subliminalen Kanal versteckten Informationen der (bevorzugt signierten) Transaktion entziehen kann, müssen der Benutzer und die Bank ein entsprechendes Geheimnis teilen.

Entsprechend einer bevorzugten Ausführungsform der vorliegenden Erfindung wird bevorzugt ein (deterministisches oder probabilistisches) Signaturverfahren mit einem subliminalen Kanal verwendet. Durch eine wie im folgenden beschriebene Erzeugung einer digitalen Signatur, wird das verwendete Signaturverfahren deterministisch.

Entsprechend einer bevorzugten Ausführungsform der vorliegenden Erfindung erzeugt der Sender 1 mittels eines Signaturverfahrens mit einem breitbandigen subliminalen Kanal ein Schlüsselpaar, welches aus einem ersten Geheimnis *d*, insbesondere ein privater Schlüssel *d* und einem öffentlichen Schlüssel *f* besteht. Danach erzeugt der Sender 1 mit Hilfe des Signaturverfahrens ein zweites Geheimnis *e*, insbesondere einen zweiten privaten Schlüssel. Wie in Figur 1 gezeigt, verwendet der Sender 1 zum Erzeugen des ersten und zweiten Geheimnisses *d* und *e* eine Kodiereinrichtung 11, wie z.B. eine Chipkarte, auf welcher ein verwendetes Signaturverfahren implementiert bzw. kodiert ist.

Geheimnisse *d, e* können ebenfalls mittels eines Zufallszahlengenerators erzeugt werden. Die erzeugten Geheimnisse *d, e* werden in der Kodiereinrichtung 11 gespeichert. Die Kodiereinrichtung 11 berechnet dann ihre Signatur deterministisch, indem sie eine Pseudozufallszahl benutzt, die aus den beiden Geheimnissen *d* und *e* generiert wird. Die Kodiereinrichtung 11 ist im Wesentlichen sicher. Entsprechend ist die Kodiereinrichtung 11 gegen unbefugtes Auslesen der Geheimnisse *d, e* (zumindest teilweise) geschützt. Weiterhin bevorzugt sind geeignete Maßnahmen vorgesehen, welche sogenannte fault induction attacks, d.h. die Berechnung einer falschen Signatur durch einen Angreifer, verhindern. Insbesondere ist die Kodiereinrichtung 11 an einem sicheren Ort hinterlegt und kann im Wesentlichen von keinem außer dem Sender 1 zugegriffen und/oder manipuliert werden.

Zusätzlich zu einer sicheren Speicherung des ersten und zweiten Geheimnisses *d, e* in der Kodiereinrichtung 11 hinterlegt der Sender 1 das zweite Geheimnis *e* bei der vertrauenswürdigen Instanz 3, insbesondere bei einer vertrauenswürdige dritte Partei (Englisch: Trusted Third Party, kurz TTP), wie beispielsweise einem Trustcenter oder einem Notar. Damit ist das zweite Geheimnis *e* sowohl dem Sender 1 als auch der vertrauenswürdigen Instanz 3 bekannt. Die vertrauenswürdige Instanz 3 ist eine dritte Instanz, der zwei Parteien, insbesondere der Sender 1 eines signierten Dokuments 12 und der Empfänger 2 des signierten Dokuments 12, vertrauen. Bei der vertrauenswürdigen Instanz 3 geht man insbesondere davon aus, daß eine Veruntreuung des zweiten Geheimnisses *e* unwahrscheinlich ist. Entsprechend ist die vertrauenswürdige Instanz 3 im Wesentlichen gegen unautorisierte Zugriffe bzw. Angriffe von Unberechtigten bzw. Angreifern abgesichert, und das zweite Geheimnis *e* ist bei der vertrauenswürdigen Instanz 3 versteckt aufbewahrt.

Möchte der Sender 1 nun dem Empfänger 2 ein (elektronisches) Dokument 10 z.B. über das Internet übersenden bzw. übermitteln, welches durch den Sender 1 signiert werden soll, so erzeugt der Sender eine digitale Signatur *s* zu dem Dokument 10. Entsprechend berechnet der Sender 1 (und zwar mit Hilfe der Kodiereinrichtung 11) zunächst einen Hashwert *m* aus dem Dokument 10, wozu der Sender 1 bevorzugt eine geeignete (insbesondere kollisionsresistente Einwegfunktion) und öffentlich bekannte Hashfunktion verwendet. In der digitalen Signatur mit breitbandigem subliminalen Kanal werden anschließend zwei Hashwerte versteckt, wobei der erste Hashwert durch Verschlüsselung des Hashwertes *m* des Dokuments 10 mit dem ersten Geheimnis *d* erfolgt und der zweite Hashwert durch Verschlüsselung des Hashwertes *m* des Dokuments 10 mit dem zweiten Geheimnis *e* erfolgt. Das mit der so erzeugten digitalen Signatur *s* ergänzte Dokument 12 sendet der Sender 1 nun an den berechtigten Empfänger 2.

Entsprechend kann der Empfänger 2 die digitale Signatur *s* verifizieren, indem der Empfänger 2 den dem ersten Geheimnis *d* entsprechenden öffentlichen Schlüssel *f* auf die digitale Signatur *s* (insbesondere auf den ersten Hashwert der digitalen Signatur *s*) anwendet und überprüft, ob der erhaltene Wert mit dem Hashwert *m* des signierten Dokuments 12 übereinstimmt.

Kann ein in dem zuvor beschriebenen Verfahren und System verwendetes Signaturverfahren nicht mehr als sicher gelten, so ist u. U. die Identität des Senders 1 des signierten Dokuments 12 anzuzweifeln. Insbesondere kann es möglich sein, daß ein (unberechtigter) Angreifer sich als Sender 1 ausgibt. Entsprechend kann die Identität des Senders 1 überprüft bzw. eine Fälschung der digitalen Signatur *s* eines (vermeintlichen) Senders 1 nachgewiesen werden. Dementsprechend berechnet die vertrauenswürdige Instanz 3, wie in Figur 1 gezeigt, einen neuen Hashwert und zwar durch Anwendung des zweiten Geheimnisses e auf den Hashwert *m* des signierten Dokuments 12. Ist der entsprechend berechnete Hashwert in der digitalen Signatur s des signierten Dokuments 12 enthalten (ist also insbesondere der von der vertrauenswürdigen Instanz 3 berechnete Hashwert mit dem zweiten verstecken Hashwert der digitalen Signatur *s* identisch), so ist die Identität des Senders 1 im Wesentlichen zweifelsfrei nachgewiesen. Ist in einem anderen Fall der entsprechend berechnete Hashwert (d.h. der Wert, welcher durch Anwendung des zweiten Geheimnisses *e* auf den Hashwert *m* des signierten Dokuments 12, erzeugt bzw. berechnet wurde) nicht in der digitalen Signatur *s* enthalten, so ist im Wesentlichen zweifelsfrei eine Fälschung der digitalen Signatur *s* durch einen Angreifer nachgewiesen bzw. bewiesen.

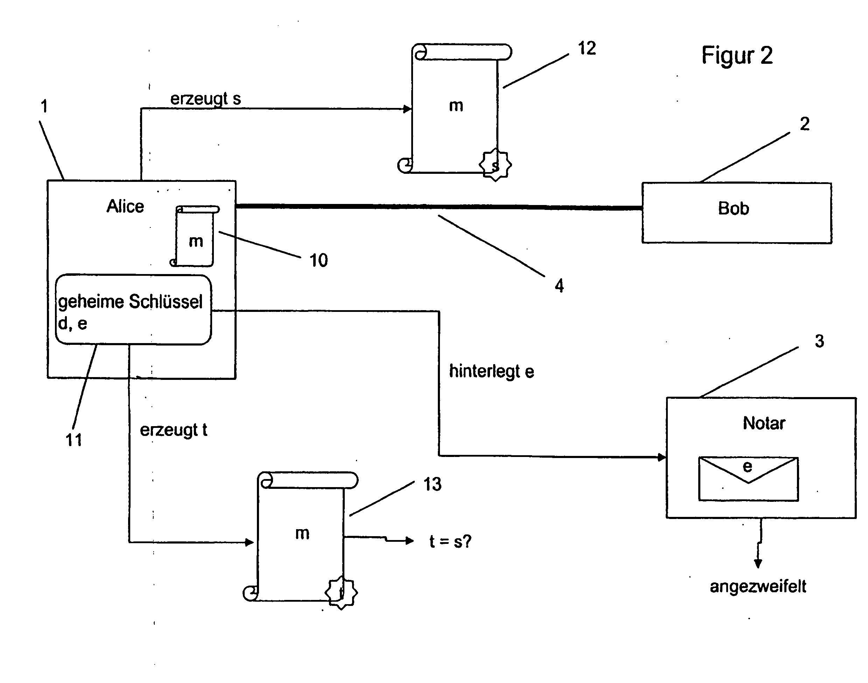

**Figur 2** zeigt eine bevorzugte Ausführungsform der vorliegenden Erfindung, in der die Integrität der vertrauenswürdigen Instanz 3 anzuzweifeln ist. Insbesondere soll die Integrität der vertrauenswürdigen Instanz 3 überprüft werden, wenn das zweite Geheimnis *e* bei der vertrauenswürdigen Instanz nicht mehr als sicher versteckt bzw. hinterlegt gelten kann, wie in Figur 2 gezeigt. Dazu wird eine zweite digitale Signatur *t* durch Anwendung des ersten und zweiten Geheimnisses *d, e* auf den Hashwert *m* des (nicht signierten) Dokuments 10 unter Verwendung der Kodiereinrichtung 11 erzeugt. Weil durch die Erzeugung einer digitalen Signatur *s* aus zwei Hashwerten, welche mittels durch ein digitales Signaturverfahren erzeugten Geheimnissen *d, e* berechnet werden, das verwendete Signaturverfahren mit breitbandigem subliminalen Kanal 4 deterministisch ist, ist die zweite digitale Signatur *t* identisch mit der ersten digitalen Signatur *s*, wenn die erste vom Sender 1 erzeugt digitale Signatur *s* gültig ist. Ansonsten ist somit eine Fälschung der digitalen Signatur *s* zumindest sehr wahrscheinlich nachgewiesen.

Entsprechend kann eine Gültigkeit der von dem Sender 1 erzeugten digitalen Signatur *s* des signierten Dokuments 12 überprüft werden, wenn die Kodiereinrichtung 11 zur Verfügung steht und unversehrt ist, also weiterhin als sicher gelten kann, auch wenn die Integrität der vertrauenswürdigen Instanz 3 anzuzweifeln ist und/oder der zweite geheime Schlüssel nicht bei der vertrauenswürdigen Instanz 3 hinterlegt wurde.

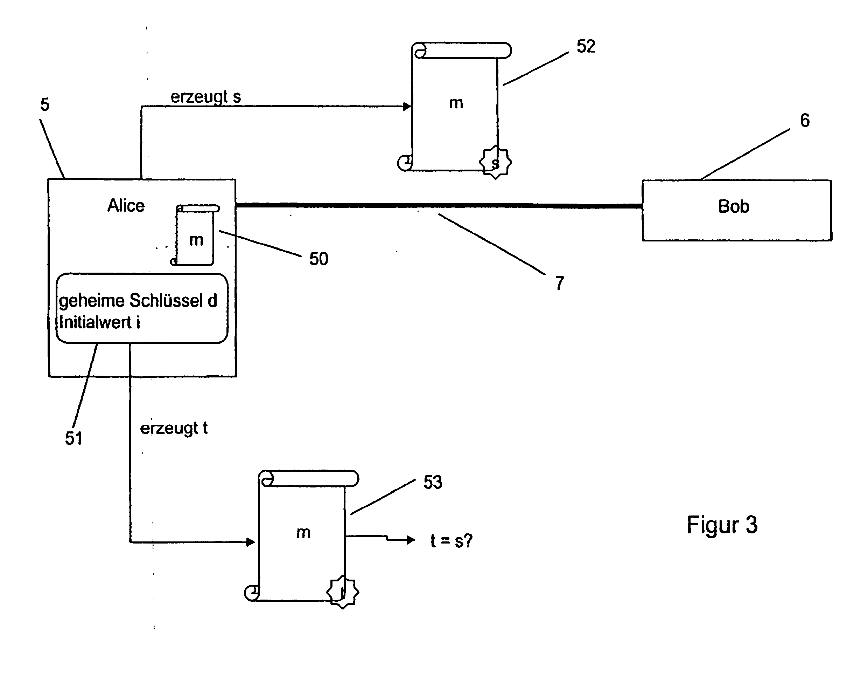

Steht in einer weiteren bevorzugten Ausführungsform der vorliegenden Erfindung kein breitbandiger subliminaler Kanal sondern ein engbandiger subliminaler Kanal 7 zur Verfügung, wie in **Figur 3** gezeigt, so kann eine Gültigkeit bzw. eine Fälschung einer digitalen Signatur *s* wie im folgenden beschrieben überprüft werden.

Ein Sender 5 verwendet zum Signieren eines (elektronischen) Dokuments 50 wie in den zuvor beschriebenen bevorzugten Ausführungsformen ein Signaturverfahren. Zunächst erzeugt der Sender 5 mittels eines Signaturverfahrens ein Schlüsselpaar, welches aus einem Geheimnis *d*, insbesondere ein geheimer Schlüssel *d* und einem öffentlichen Schlüssel *f* besteht. Danach erzeugt der Sender 5 z.B. unter Verwendung eines Zufallsgenerators einen Initialwert *i*. Wie in Figur 3 gezeigt, verwendet der Sender 1 zum Erzeugen des Geheimnisses d und des Initialwertes *i* eine Kodiereinrichtung 51, wie z.B. eine Chipkarte, auf welcher bevorzugt ein Signaturverfahren und ein Pseudozufallsgenerator implementiert bzw. kodiert sind. Das erzeugte Geheimnis *d* und der erzeugte Initialwert *i* werden in der Kodiereinrichtung 51 gespeichert. Die Kodiereinrichtung 51 ist im Wesentlichen ähnlich zu einer Kodierungseinrichtung 11 der zuvor beschriebenen bevorzugten Ausführungsformen sicher.

Möchte der Sender 5 nun einem Empfänger 6 ein (elektronisches) Dokument 50 z.B. über das Internet übersenden bzw. übermitteln, welches durch den Sender 5 signiert werden soll, so erzeugt der Sender eine digitale Signatur *s* zu dem Dokument 50. Entsprechend berechnet der Sender 5 (und zwar mit Hilfe der Kodiereinrichtung 51) zunächst einen Hashwert *m* aus dem Dokument 50, wozu der Sender 5 eine geeignete (insbesondere kollisionsresistente Einwegfunktion) und öffentlich bekannte Hashfunktion verwendet. In der digitalen Signatur mit engbandigem subliminalen Kanal werden anschließend zwei Hashwerte versteckt, wobei der erste Hashwert dem in der Kodiereinrichtung 51 erzeugtem Initialwert *i* entspricht und der zweite Hashwert durch Verschlüsselung des Hashwertes *m* des Dokuments 50 mit dem Geheimnis *d* berechnet bzw. erzeugt wird. Das mit der so erzeugten digitalen Signatur *s* ergänzte Dokument 52 sendet der Sender 5 nun an den berechtigten Empfänger 6. Entsprechend kann der Empfänger 6 die digitale Signatur *s* verifizieren, indem der Empfänger 6 den dem Geheimnis *d* entsprechenden öffentlichen Schlüssel *f* auf die digitale Signatur *s* (insbesondere auf den zweiten Hashwert der digitalen Signatur *s*) anwendet und überprüft, ob der erhaltene Wert mit dem Hashwert *m* des signierten Dokuments 52 übereinstimmt.

Sollte nun die Identität des Senders 5 angezweifelt werden, kann die Identität des Sender 5 überprüft werden, wie in Figur 3 gezeigt. Dazu wird eine zweite digitale Signatur *t* durch Verwendung des Initialwertes *i* und durch Anwendung des Geheimnisses *d* auf den Hashwert *m* des (nicht signierten) Dokuments 50 unter Verwendung der Kodiereinrichtung 51 erzeugt. Weil durch die Erzeugung einer digitalen Signatur *s* aus einem Initialwert i und eines Hashwertes, welcher mittels durch ein digitales Signaturverfahren erzeugten Geheimnisses *d* berechnet wird, das verwendete Signaturverfahren mit engbandigem subliminalen Kanal 7 deterministisch ist, ist die zweite digitale Signatur *t* identisch mit der ersten digitalen Signatur *s*, wenn die erste vom Sender 5 erzeugt digitale Signatur *s* gültig ist. Ansonsten ist somit eine Fälschung der digitalen Signatur *s* nachgewiesen oder zumindest sehr wahrscheinlich.

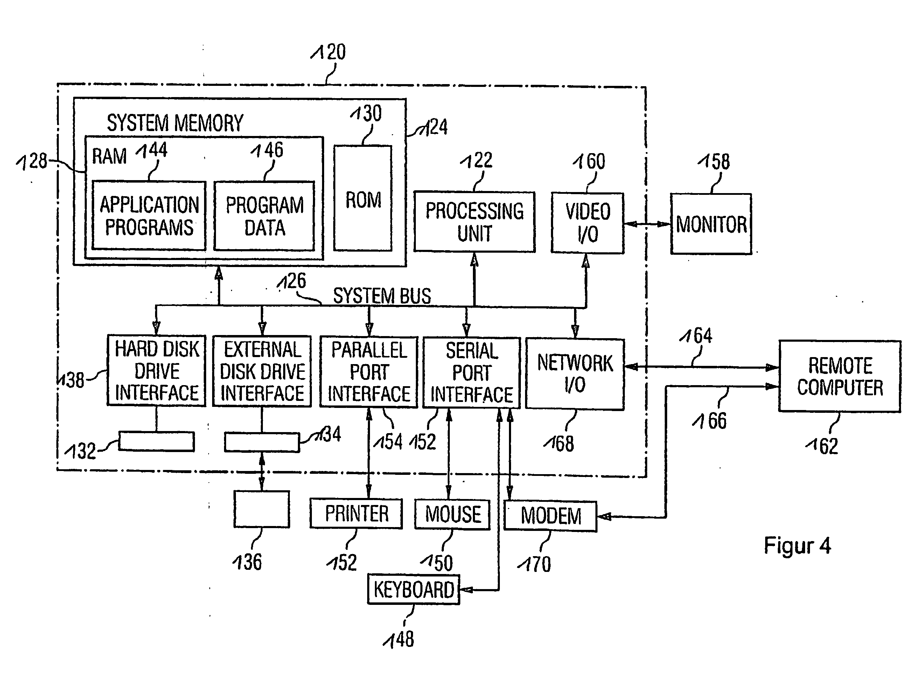

Bezugnehmend auf **Figur 4** wird ein beispielhaftes System zum Implementieren der Erfindung beschrieben. Ein beispielhaftes System umfaßt eine universelle Rechnereinrichtung in der Form einer herkömmlichen Rechnerumgebung 120 z.B. ein "personal computer" (PC) 120, mit einer Prozessoreinheit 122, einem Systemspeicher 124 und einem Systembus 126, welcher eine Vielzahl von Systemkomponenten, unter anderem den Systemspeicher 124 und die Prozessoreinheit 122 verbindet. Die Prozessoreinheit 122 kann arithmetische, logische und/oder Kontrolloperationen durchführen, indem auf den Systemspeicher 124 zugegriffen wird. Der Systemspeicher 124 kann Informationen und/oder Instruktionen zur Verwendung in Kombination mit der Prozessoreinheit 122 speichern. Der Systemspeicher 124 kann flüchtige und nichtflüchtige Speicher, beispielsweise "random access memory" (RAM) 128 und "Nur-Lesespeicher" (ROM) 130 beinhalten. Ein Grund-Eingabe-Ausgabe-System (BIOS), das die grundlegenden Routinen enthält, welche helfen, Informationen zwischen den Elementen innerhalb des PCs 120, beispielsweise während des Hochfahrens, zu transferieren, kann in dem ROM 130 gespeichert sein. Der Systembus 126 kann eine von vielen Busstrukturen sein, unter anderem ein Speicherbus oder ein Speichercontroller, ein peripherer Bus und ein lokaler Bus, welcher eine bestimmte Busarchitektur aus einer Vielzahl von Busarchitekturen verwendet.

Der PC 120 kann weiterhin ein Festplattenlaufwerk 132 zum Lesen oder Schreiben einer Festplatte (nicht gezeigt) aufweisen und ein externes Disklaufwerk 134 zum Lesen oder Schreiben einer entfernbaren Disk 136 bzw. eines entfernbaren Datenträgers. Die entfernbare Disk kann eine magnetische Disk bzw. eine magnetische Diskette für ein magnetisches Disklaufwerk bzw. Diskettenlaufwerk oder eine optische Diskette wie z.B. eine CD-ROM für ein optisches Disklaufwerk sein. Das Festplattenlaufwerk 132 und das externe Disklaufwerk 134 sind jeweils mit dem Systembus 126 über eine Festplattenlaufwerkschnittstelle 138 und eine externe Disklaufwerkschnittstelle 140 verbunden. Die Laufwerke und die zugeordneten computerlesbaren Medien stellen einen nichtflüchtigen Speicher computeriesbarer Instruktionen, Datenstrukturen, Programm-Modulen und anderer Daten für den PC 120 zur Verfügung. Die Datenstrukturen können die relevanten Daten zum Implementieren eines wie oben beschriebenen Verfahrens aufweisen. Obwohl die beispielshaft beschriebene Umgebung eine Festplatte (nicht gezeigt) und eine externe Disk 142 verwendet, ist für den Fachmann offensichtlich, daß andere Typen computerlesbarer Medien, welche computerzugreifbare Daten speichern können, in der beispielhaften Arbeitsumgebung verwendet werden können, wie z.B. magnetische Kassetten, Flash-Memory Karten, digitale Videodisketten, Random-Access-Speicher, Nur-Lesespeicher, usw..

Eine Vielzahl von Programm-Modulen, insbesondere ein Betriebssystem (nicht gezeigt) ein oder mehrere Applikationsprogramme 144, oder Programm-Module (nicht gezeigt) und Programmdaten 146, können auf der Festplatte, der externen Disk 142, dem ROM 130 oder dem RAM 128 gespeichert werden. Die Applikationsprogramme können zumindest einen Teil der Funktionalität, wie in Figur 4 gezeigt, umfassen.

Ein Benutzer kann Kommandos und Information, wie oben beschrieben, in den PC 120 anhand von Eingabevorrichtungen, wie z.B. einer Tastatur bzw. eines Keyboards 148 und einer Computermaus bzw. einem Trackball 150 eingeben. Andere Eingabevorrichtungen (nicht gezeigt) können ein Mikrofon und/andere Sensoren, einen Joystick, ein Spiel polster bzw. -kissen, einen Scanner oder ähnliches umfassen. Diese oder andere Eingabevorrichtungen können mit der Prozessoreinheit 122 anhand einer seriellen Schnittstelle 152 verbunden sein, welche mit dem System 126 gekoppelt ist, oder können anhand anderer Schnittstellen, wie z.B. einer parallelen Schnittstelle 154, eines Spieleports oder eines universellen seriellen Busses (USB) verbunden sein. Weiterhin kann Information mit einem Drucker 156 gedruckt werden. Der Drucker 156 und andere parallele Eingabe/Ausgabevorrichtungen können mit der Prozessoreinheit 122 durch die parallele Schnittstelle 154 verbunden sein. Ein Monitor 158 oder andere Arten von Anzeigevorrichtung(en) ist/sind mit dem Systembus 126 mittels einer Schnittstelle, wie z.B. eines Videoeingang/-ausgangs 160 verbunden. Zusätzlich zu dem Monitor kann die Rechnerumgebung 120 andere periphere Ausgabevorrichtungen (nicht gezeigt) wie z.B. Lautsprecher oder akustische Ausgänge umfassen.

Die Rechnerumgebung 120 kann mit anderen elektronischen Vorrichtungen z.B. einem Computer, einem Schnurtelefon, einem schnurlosen Telefon, einem persönlichen digitalen Assistenten (PDA), einem Fernseher oder ähnlichem kommunizieren. Um zu kommunizieren, kann die Rechnerumgebung 120 in einer vernetzten Umgebung arbeiten, wobei Verbindungen zu einem oder mehreren elektronischen Vorrichtungen verwendet werden. Figur 4 stellt die mit einem "remote computer" bzw. entfernten Computer 162 vernetzte Rechnerumgebung dar. Der entfernte Computer 162 kann eine andere Rechnerumgebung, wie z.B. ein Server, ein Router, ein Netzwerk-PC, eine gleichwertige bzw. "peer" Vorrichtung oder andere gewöhnliche Netzwerkknoten sein und kann viele oder alle der hinsichtlich der Rechnerumgebung 120 oben beschriebenen Elemente umfassen. Die logischen Verbindungen, wie sie in Figur 4 dargestellt sind, umfassen ein "local area network" (LAN) 164 und ein "wide are network" (WAN) 166. Solche Netzwerkumgebungen sind alltäglich in Büros, firmenweiten Computernetzwerken, Intranetzen und dem Internet.

Wenn eine Rechnerumgebung 120 in einer LAN-Netzwerkumgebung verwendet wird, kann die Rechnerumgebung 120 mit dem LAN 164 durch einen Netzwerkeingang/-ausgang 168 verbunden sein. Wenn die Rechnerumgebung 120 in einer WAN-Netzwerkumgebung verwendet wird, kann die Rechnerumgebung 120 ein Modem 170 oder andere Mittel zum Herstellen einer Kommunikation über das WAN 166 umfassen. Das Modem 170, welches intern und extern bezüglich der Rechnerumgebung 120 sein kann, ist mit dem Systembus 126 mittels der seriellen Schnittstelle 152 verbunden. In der Netzwerkumgebung können Programm-Module, welche relativ zu der Rechnerumgebung 120 dargestellt sind, oder Abschnitte davon in einer entfernten Speichereinrichtung gespeichert sein, welche an oder von einem entfernten Computer 162 zugreifbar bzw. systemeigen sind. Weiterhin können andere Daten, welche für das oben beschriebene Verfahren bzw. System relevant sind, auf oder von dem entfernten Computer 162 zugreifbar vorliegen.

### Bezugszeichenliste

- 1;5: Sender
- 10; 50: Dokument
- 11; 51: Kodiereinrichtung
- 12; 52: signiertes Dokument
- 13: signiertes Dokument
- 2; 6: Empfänger
- 3: vertrauenswürdige Instanz
- 4; 7: subliminaler Kanal
- 120: Rechnerumgebung
- 122: Prozessoreinheit
- 124: Systemspeicher
- 126: Systembus
- 128: random access memory (RAM)
- 130: Nur-Lesespeicher (ROM)
- 132: Festplattenlaufwerk
- 134: Disklaufwerk
- 136: entfernbare Disk
- 138: Festplattenlaufwerkschnittstelle
- 140: Disklaufwerkschnittstelle
- 142: externe Disk
- 144: Applikationsprogramm
- 146: Programmdaten
- 148: Tastatur
- 150: Computermaus/Trackball
- 152: serielle Schnittstelle
- 154: parallele Schnittstelle
- 156: Drucker
- 158: Monitor
- 160: Videoeingang/ -ausgang
- 162: entfernter Computer
- 164: "local area network" (LAN)
- 166: "wide area network" (WAN)
- 168: Netzwerkeingang/ -ausgang

## Patentansprüche

1. Computer-implementiertes Verfahren zur Identifikation zumindest einer gültigen digitalen Signatur, die Schritte umfassend:
- Bereitstellen einer digitalen Signatur s mit breitbandigem subliminalen Kanal (4), welche von einem Sender (1) zu einem Empfänger (2) versendbar ist;
- Vorsehen eines ersten Geheimnisses *d*, welches nur bei dem Sender (1) hinterlegt ist;
- Vorsehen eines zweiten Geheimnisses *e*, welches nur bei dem Sender (1) und bei einer vertrauenswürdigen Instanz (3) hinterlegt ist; und
- Verstecken zweier Hashwerte in der digitalen Signatur s mit breitbandigem subliminalen Kanal (4), wobei der erste Hashwert von einem zu verschlüsselnden Dokument (10) erzeugten Hashwert m und dem ersten Geheimnis *d* und der zweite Hashwert von dem Hashwert *m* des Dokuments (10) und dem zweiten Geheimnis *e* erzeugt wird;
wobei die Identität des Senders (1) durch die vertrauenswürdige Instanz (3) unter Verwendung des Hashwertes *m*, dem zweiten Geheimnis *e* und der digitalen Signatur *s* überprüfbar ist.

2. Computer-implementiertes Verfahren nach Anspruch 1, weiterhin den Schritt umfassend:
- Überprüfen einer Integrität der vertrauenswürdigen Instanz (3) durch Vergleich der digitalen Signatur *s* mit einer zweiten digitalen Signatur *t*, welche unter Verwendung des ersten Geheimnisses *d*, des zweiten Geheimnisses *e* und der Daten *m* erzeugt wird.

3. Computer-implementiertes Verfahren nach einem oder mehreren der vorangegangenen Ansprüche, wobei das erste Geheimnis *d* und das zweite Geheimnis *e* in einer Kodiereinrichtung (11) gespeichert sind.

4. Computer-implementiertes Verfahren nach einem oder mehreren der vorangegangenen Ansprüche, der Schritt des Vorsehens eines ersten Geheimnisses d, den Schritt umfassend:
- Erzeugen des ersten Geheimnisses *d* durch ein Zufallszahlengenerator.

5. Computer-Implementiertes Verfahren nach Anspruch 4, der Schritt des Vorsehens eines zweiten Geheimnisses den Schritt umfassend:
- Erzeugen des zweiten Geheimnisses *e* durch den Zufallszahlengenerator.

6. Computerprogrammprodukt, umfassend computerlesbare Befehle, die, wenn geladen in den Speicher eines Computers und ausgeführt von einem Computer, bewirken, daß der Computer ein Verfahren nach einem oder mehreren der Ansprüche 1 bis 5 durchführt.

7. System zur Identifikation zumindest einer gültigen Signatur, umfassend:
- Signaturverfahren mit breitbandigem subliminalen Kanal (4), welches zwischen einem Sender (1) und einem Empfänger (2) verwendbar ist;
- eine Kodierungseinrichtung (11), welche ausgelegt ist, ein erstes Geheimnis *d* und ein zweites Geheimnis *e* zu speichern und zwei Hashwerte in der digitalen Signatur s mit breitbandigem subliminalen Kanal (4) zu verstecken, wobei der erste Hashwert von einem zu verschlüsseinden Dokument (10) erzeugten Hashwert *m* und dem ersten Geheimnis d und der zweite Hashwert von dem Hashwert *m* des Dokuments (10) und dem zweiten Geheimnis *e* erzeugt wird und
- eine vertrauenswürdige Instanz (3), welche ausgelegt ist, das zweite Geheimnis *e* zu hinterlegen, wobei die Identität des Senders (1) der digitalen Signatur *s* unter Verwendung des Hashwertes *m*, dem zweiten Geheimnis *e* und der digitalen Signatur s durch die vertrauenswürdige Instanz (3) überprüfbar ist.

8. System nach Anspruch 7, weiterhin umfassend:
- die Kodiereinrichtung (11), welche weiterhin ausgelegt ist, eine Integrität der vertrauenswürdigen Instanz (3) zu überprüfen und zwar durch Vergleich der digitalen Signatur *s* mit einer zweiten digitalen Signatur *t*, welche unter Verwendung des ersten Geheimnisses *d*, des zweiten Geheimnisses *e* und der Daten *m* erzeugt wird.

9. System nach Anspruch 7 oder 8, wobei die Kodierelnrichtung (11) weiterhin ausgelegt ist, das erste Geheimnis *d* durch einen Zufallszahlengenerator zu erzeugen.

10. System nach Anspruch 9, wobei die Kodiereinrichtung (11) weiterhin ausgelegt ist, das zweite Geheimnis *e* durch den Zufallszahlengenerator zu erzeugen.

11. Computer-Implementiertes Verfahren zur Identifikation zumindest einer gültigen digitalen Signatur, die Schritte umfassend:
- Bereitstellen einer digitalen Signatur s mit engbandigem subliminalen Kanal (7), welche von einem Sender (5) zu einem Empfänger (6) versendbar ist;
- Vorsehen eines Geheimnisses *d*, welches nur bei einem Sender (5) in einer Kodiereinrichtung (50) hinterlegt ist;
- Vorsehen eines Initialwertes *i*, welcher nur bei dem Sender (5) in der Kodiereinrichtung (50) hinterlegt ist; und
- Erzeugen einer digitalen Signatur s. und zwar durch den Initialwert *i* und durch Anwendung des Geheimnisses *d* auf Daten *m*;
wobei die Identität des Senders (5) durch Vergleich der digitalen Signatur *s* mit einer zweiten digitalen Signatur *t* überprüfbar ist, welche unter Verwendung des Initialwertes *i*, des Geheimnisses *d* und der Daten *m* erzeugt wird.

12. System zur Identifikation zumindest einer gültigen Signatur, umfassend:
- ein Signaturverfahren mit engbandigem subliminalen Kanal (7), welches zwischen einem Sender (5) und einem Empfänger (6) verwendbar ist; und
- eine Kodierungseinrichtung (51), welche ausgelegt ist, einen Inidalwert *i* und ein Geheimnis *d* zu speichern und eine digitale Signatur *s* zu erzeugen und zwar durch Verwendung des initialwertes *1* und durch Anwendung des Geheimnisses *d* auf Daten *m*,
- wobei die Identität des Senders der digitalen Signatur *s* durch (5) die Kodierungseinrichtung (51) überprüfbar ist und zwar durch Vergleich der digitalen Signatur *s* mit einer zweiten digitalen Signatur *t*, welche unter Verwendung des Initialwertes *i*, des Geheimnisses *d* und der Daten *m* erzeugt wird.

## Claims

1. A computer-implemented method for identifying at least one valid digital signature, comprising the steps of:
- making available a digital signature *s* with a broadband subliminal channel (4), which can be sent from a sender (1) to a receiver (2);
- providing a first secret *d*, which is only deposited with the sender (1);
- providing a second secret *e*, which is only deposited with the sender (1) and a trustworthy instance (3); and
- hiding two hash values in the digital signature *s* with the broadband subliminal channel (4), wherein the first hash value is generated from a hash value *m* generated by a document (10) to be encrypted and the first secret *d*, and the second hash value is generated from the hash value *m* of the document (10) and the second secret *e*;
wherein the identity of the sender (1) can be verified by the trustworthy instance (3) using the hash value *m*, the second secrete *e*, and the digital signature *s*.

2. The computer-implemented method according to claim 1, further comprising the step of:
- verifying an integrity of the trustworthy instance (3) by comparing the digital signature *s* with a second digital signature *t*, which is generated using the first secret *d*, the second secret *e*, and the data *m*.

3. The computer-implemented method according to one or more of the preceding claims, wherein the first secret *d* and the second secret *e* are stored in an encoding device (11).

4. The computer-implemented method according to one or more of the preceding claims, the step of providing a first secret *d* comprising the step of:
- generating the first secret *d* by a random number generator.

5. The computer-implemented method according to claim 4, the step of providing a second secret *e* comprising the step of:
- generating the second secret *e* by the random number generator.

6. A computer program product, comprising computer-readable instructions, which, when loaded in the memory of a computer and executed on a computer, cause the computer to perform a method according to one or more of the claims 1 to 5.

7. A system for identifying at least one valid signature, comprising:
- signature method with a broadband subliminal channel (4), which can be used between a sender (1) and a receiver (2);
- an encoding device (11) adapted to store a first secret *d* and a second secret *e* and to hide two hash values in the digital signature *s* with the broadband subliminal channel (4), wherein the first hash value is generated from a hash value *m* generated by a document (10) to be encrypted and the first secret *d*, and the second hash value is generated from the hash value *m* of the document (10) and the second secret *e*; and
- a trustworthy instance (3) adapted to deposit the second secret *e*, wherein the identity of the sender (1) of the digital signature *s* can be verified by the trustworthy instance (3) using the hash value *m*, the second secrete *e*, and the digital signature *s*.

8. The system according to claim 7, further comprising:
- the encoding device (11) further adapted to verify an integrity of the trustworthy instance (3) by comparing the digital signature *s* with a second digital signature *t*, which is generated using the first secret *d*, the second secret *e*, and the data *m*.

9. The system according to claim 7 or 8, wherein the encoding device (11) is further adapted to generate the first secret *d* by a random number generator.

10. The system according to claim 9, wherein the encoding device (11) is further adapted to generate the second secret *e* by the random number generator.

11. A computer-implemented method for identifying at least one valid digital signature, comprising the steps of:
- making available a digital signature *s* with a narrowband subliminal channel (7), which can be sent from a sender (5) to a receiver (6);
- providing a secret *d*, which is only deposited with a sender (5) in an encoding device (50);
- providing an initial value *i*, which is only deposited with the sender (5) in the encoding device (50); and
- generating a digital signature *s* by the initial value *i* and by applying the secret *d* to data *m*;
wherein the identity of the sender (5) can be verified by comparing the digital signature *s* with a second digital signature *t*, which is generated using the initial value *i*, the secret *d*, and the data *m*.

12. A system for identifying at least one valid signature, comprising:
- a signature method with a narrowband subliminal channel (7), which can be used between a sender (5) and a receiver (6); and
- an encoding device (51) adapted to store an initial value *i* and a secret *d* and to generate a digital signature *s* by using the initial value *i* and by applying the secret *d* to data *m*;
- wherein the integrity of the sender (5) of the digital structure *s* can be verified by the encoding device (51) by comparing the digital signature *s* with a second digital signature *t*, which is generated using the initial value *i*, the secret *d*, and the data *m*.

## Revendications

1. Procédé mis en oeuvre par ordinateur pour l'identification d'au moins une signature numérique valable, comprenant les étapes suivantes :
- mettre à disposition une signature numérique s avec une voie de transmission subliminale à large bande (4), qui peut être envoyée d'un émetteur (1) à un récepteur (2) ;
- prévoir un premier secret *d*, qui est déposé uniquement auprès de l'émetteur (1) ;
- prévoir un deuxième secret *e*, qui est déposé uniquement auprès de l'émetteur (1) et auprès d'une instance ou entité (3) digne de confiance ; et
- cacher deux condensés *(Hashwerte)* dans la signature numérique *s* avec une voie de transmission subliminale à large bande (4), sachant que le premier condensé est créé à partir d'un condensé *m* créé à partir d'un document à cryptographier (10) et d'un premier secret *d* et que le deuxième condensé est créé à partir du condensé *m* du document (10) et du deuxième secret *e* ;
sachant que l'identité de l'émetteur (1) peut être vérifiée par l'entité (3) digne de confiance en utilisant le condensé *m*, le deuxième secret *e* et la signature numérique *s*.

2. Procédé mis en oeuvre par ordinateur d'après la revendication 1, comprenant en outre l'étape suivante :
- vérifier l'intégrité de l'entité (3) digne de confiance en comparant la signature numérique *s* avec une deuxième signature numérique *t*, qui est créée en utilisant le premier secret *d*, le deuxième secret *e* et les données *m*.

3. Procédé mis en oeuvre par ordinateur d'après une ou plusieurs des revendications précédentes, sachant que le premier secret *d* et le deuxième secret *e* sont mémorisés dans un dispositif de codage (11).

4. Procédé mis en oeuvre par ordinateur d'après une ou plusieurs des revendications précédentes, sachant que l'étape consistant à prévoir un premier secret *d* comprend le fait de :
- créer un premier secret *d* au moyen d'un générateur de nombres aléatoires.

5. Procédé mis en oeuvre par ordinateur d'après la revendication 4, sachant que l'étape consistant à prévoir un deuxième secret *e* comprend le fait de :
- créer un deuxième secret *e* au moyen du générateur de nombres aléatoires.

6. Programme d'ordinateur en tant que produit, comprenant des instructions lisibles par ordinateur, lesquelles, lorsqu'elles sont chargées dans la mémoire d'un ordinateur et exécutées par un ordinateur, amènent l'ordinateur à effectuer un procédé d'après une ou plusieurs des revendications de 1 à 5.

7. Système d'identification d'au moins une signature valable, comprenant :
- un procédé de signature avec une voie de transmission subliminale à large bande (4), utilisable entre un émetteur (1) et un récepteur (2) ;
- un dispositif de codage (11), réalisé de manière à permettre de mémoriser un premier secret *d* et un deuxième secret *e* et de cacher deux condensés dans la signature numérique *s* avec une voie de transmission subliminale à large bande (4), sachant que le premier condensé est créé à partir d'un condensé *m* créé à partir d'un document à cryptographier (10) et d'un premier secret *d* et que le deuxième condensé est créé à partir du condensé *m* du document (10) et du deuxième secret *e* ; et
- une entité (3) digne de confiance, réalisée de manière à permettre la déposition du deuxième secret *e*, sachant que l'identité de l'émetteur (1) de la signature numérique *s* peut être vérifiée par l'entité (3) digne de confiance en utilisant le condensé *m*, le deuxième secret *e* et la signature numérique *s*.

8. Un système d'après la revendication 7, comprenant en outre :
- le dispositif de codage (11), en outre réalisé de manière à permettre de vérifier une intégrité de l'entité (3) digne de confiance et plus précisément en comparant la signature numérique *s* avec une deuxième signature numérique *t*, qui est créée en utilisant le premier secret *d*, le deuxième secret *e* et les données *m*.

9. Un système d'après la revendication 7 ou 8, sachant que le dispositif de codage (11) est en outre réalisé de manière à ce que le premier secret *d* soit créé au moyen d'un générateur de nombres aléatoires.

10. Un système d'après la revendication 9, sachant que le dispositif de codage (11) est en outre réalisé de manière à ce que le deuxième secret *e* soit créé au moyen du générateur de nombres aléatoires.

11. Procédé mis en oeuvre par ordinateur pour l'identification d'au moins une signature numérique valable, comprenant les étapes suivantes :
- mettre à disposition une signature numérique *s* avec une voie de transmission subliminale à bande étroite (7), qui peut être envoyée d'un émetteur (5) à un récepteur (6) ;
- prévoir un secret *d*, qui est déposé uniquement auprès d'un émetteur (5) dans un dispositif de codage (50);
- prévoir une valeur initiale *i*, qui est déposée uniquement auprès de l'émetteur (5) dans le dispositif de codage (50); et
- générer une signature numérique *s* et plus précisément au moyen de la valeur initiale *i* et en appliquant le secret *d* aux données *m* ;
sachant que l'identité de l'émetteur (5) peut être vérifiée en comparant la signature numérique *s* avec une deuxième signature numérique *t*, qui est créée en utilisant la valeur initiale *i*, le secret *d* et les données *m*.

12. Système d'identification d'au moins une signature numérique valable, comprenant :
- un procédé de signature avec une voie de transmission subliminale à bande étroite (7), qui est utilisable entre un émetteur (5) et un récepteur (6) ; et
- un dispositif de codage (51), qui est réalisé de manière à mémoriser une valeur initiale *i* et un secret *d* et de manière à créer une signature numérique *s* et plus précisément en utilisant la valeur initiale *i* et en appliquant le secret *d* aux données *m*,
- sachant que l'identité de l'émetteur (5) de la signature numérique *s* peut être vérifiée par le dispositif de codage (51) et plus précisément en comparant la signature numérique s avec une deuxième signature numérique *t*, laquelle est créée en utilisant la valeur initiale *i*, le secret *d* et les données *m*.
